(19) 

Europäisches
Patentamt

European
Patent Office

Office européen
des brevets

(11) **EP 2 320 578 A1**

(12) **EUROPEAN PATENT APPLICATION**

(43) Date of publication:
**11.05.2011 Bulletin 2011/19**

(51) Int Cl.:
**H04B 7/08** (2006.01)

(21) Application number: **09290842.5**

(22) Date of filing: **06.11.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **Alcatel Lucent
75008 Paris (FR)**

(72) Inventors:
• **Zimaliev, Aydar
70182 Stuttgart (DE)**

• **Richter, Robert
12105 Berlin (DE)**
• **Jeschke, Michael
70184 Stuttgart (DE)**

(74) Representative: **Schäfer, Wolfgang et al
Dreiss Patentanwälte
Postfach 10 37 62
70032 Stuttgart (DE)**

(54) **Wireless communications device and method of operating a wireless communication device**

(57)     The invention relates to a method of operating a wireless communications device, particularly a receiver (20), wherein a noise plus interference covariance matrix is estimated, preferably depending on a received signal (yref), to obtain an estimated noise plus interference covariance matrix (Rni_est), wherein a quality measure (m) for said estimated noise plus interference covariance matrix (Rni_est) is determined (200) depending on said estimated noise plus interference covariance matrix (Rni_est).

**Fig. 2**

EP 2 320 578 A1

## Description

### Field of the Invention

The invention relates to a method of operating a wireless communications device.

The invention further relates to a wireless communications device.

### Background

Radio signals transmitted over an air interface to a wireless communications device suffer typically from noise and interference caused by multipath propagation, other radio signals on the same frequency band, and thermal noise. If these types of interference are not suppressed at the receiver side, successful recovery of transmitted data may not be possible at the receiver. Additionally, the interference typically sets a limit for the capacity of a radio telecommunications system.

Interference rejection combining (IRC) is known as an interference suppression method in a wireless communications device such as a radio receiver utilizing multiple reception diversity branches. IRC is based on an estimated spatial noise covariance matrix, which is used for solving optimal antenna combining weights. IRC usually provides gain compared to a maximum ratio combiner (MRC) if interference-plus-noise is spatially colored. However, if the quality of the noise covariance matrix estimate is poor due to lack of statistics or when the noise is only slightly colored or even spatially uncorrelated (like thermal noise), then IRC causes performance loss compared to MRC.

Accordingly, there is a need to provide a more sophisticated wireless communications device and operating method for such communications device which enables an improved wireless data reception and processing.

### Summary

According to the present invention, regarding the above-mentioned method of operating a wireless communications device, this object is achieved by estimating a noise plus interference covariance matrix, preferably depending on a received signal, to obtain an estimated noise plus interference covariance matrix, and by determining a quality measure for said estimated noise plus interference covariance matrix depending on said estimated noise plus interference covariance matrix.

The inventive determination of the quality measure advantageously enables to assess the suitability of the estimated noise plus interference covariance matrix, which characterizes a correlation of noise and interference as comprised within the signals received by the wireless communications device.

Thus, prior to applying conventional IRC schemes for processing the received signals, an inventive device may judge - based on the inventive quality measure - whether the current estimated noise plus interference covariance matrix is suitable for applying IRC schemes or not. Thus, performance loss can be eliminated in situations where interference is at least nearly spatially uncorrelated, because the invention provides a robust method for detecting low spatial noise correlation based on the quality measure.

According to a preferred embodiment, a received signal is received via $n_{Rx}$ many receive channels, particularly via $n_{Rx}$ many receiver antennas, and said quality measure is determined depending on a determinant of said estimated noise plus interference covariance matrix and/or a trace of said estimated noise plus interference covariance matrix and/or said number $n_{Rx}$ of receive channels. For instance, the inventive communications device may be configured as a SIMO (single input, multiple output) or a MIMO (multiple input, multiple output) capable receiver having a respective number $n_{Rx}$ of receiving antennas. The inventive determination of said quality measure depending on the determinant and/or trace of said estimated noise plus interference covariance matrix and/or said number $n_{Rx}$ is particularly advantageous, since it allows for an efficient numerical determination. Furthermore, according to Applicant's analysis, a so determined quality measure provides precise information on the reliability of the estimated noise plus interference covariance matrix regarding the application of IRC schemes.

According to a particularly preferred embodiment, said quality measure is determined depending on a quotient of said determinant of said estimated noise plus interference covariance matrix and said trace of said estimated noise plus interference covariance matrix.

According to a further particularly preferred embodiment, said quality measure is determined depending on the equation

$$m = \frac{n_{Rx} \cdot \det(\hat{R}_{ni})^{\frac{1}{n_{Rx}}}}{trace(\hat{R}_{ni})} \quad \text{(equation 1)},$$

wherein $det(\hat{R}_{ni})$ is the determinant of said estimated noise plus interference covariance matrix $\hat{R}_{ni}$, wherein $trace(\hat{R}_{ni})$ is the trace of said estimated noise plus interference covariance matrix $\hat{R}_{ni}$, and wherein $n_{Rx}$ is the number of receive channels, i.e. the number of receive antennas if a SIMO or MIMO configuration of the wireless communications receiver device is considered.

The aforementioned equation (1) advantageously provides a parameter range of 0 to 1 for the quality measure m, which is due a normalization attained by the exponential term " $\frac{1}{n_{Rx}}$ " and the factor " $n_{Rx}$ " in the numerator of equation (1). Of course, equations derived from equation (1) and having the general form

$$m = \frac{c1 \cdot \det(\hat{R}_{ni})^{c2}}{trace(\hat{R}_{ni})^{c3}} \quad \text{(equation 1a)},$$

wherein c1, c2, c3 are e.g. predetermined real numbers, may also be employed to determine the inventive quality measure m depending on the estimated noise plus interference covariance matrix $\hat{R}_{ni}$.

Still another preferred embodiment of the method according to the present invention proposes to modify said estimated noise plus interference covariance matrix depending on said quality measure to obtain a modified noise plus interference covariance matrix. This advantageously enables to proceed with proper IRC processing based on the modified noise plus interference covariance matrix even if the originally determined estimated noise plus interference covariance matrix has turned out not to be suitable for IRC processing according to the inventive method. I.e., once the application of the inventive method yields that it is not advisable to use the originally determined estimated noise plus interference covariance matrix due to its poor quality, i.e. due to a bad value of the inventive quality measure, the further inventive embodiment enables to modify the originally determined estimated noise plus interference covariance matrix. The inventive modification is performed so as to obtain a modified noise plus interference covariance matrix which is optimally suited for further processing such as e.g. applying IRC schemes and the like.

According to a further embodiment of the present invention, said modification is performed if the quality measure exceeds a predetermined threshold value. Otherwise, i.e. if said predetermined threshold value is not exceeded by the inventive quality measure, the inventive method concludes that the originally determined estimated noise plus interference covariance matrix is sufficient for further processing, i.e. it is not necessary to provide a modified estimated noise plus interference covariance matrix.

According to a further embodiment of the present invention, said modified noise plus interference covariance matrix is obtained depending on the equation

$$\hat{R}_{ni\_mod} = \frac{trace(\hat{R}_{ni})}{n_{Rx}} I \quad \text{(equation 2)},$$

wherein $trace(\hat{R}_{ni})$ is the trace of said estimated noise plus interference covariance matrix $\hat{R}_{ni}$, wherein I is the identity matrix, and wherein $n_{Rx}$ is the number of receive channels.

A generalized form of equation (2) may also be applied for obtaining the modified noise plus interference covariance matrix $\hat{R}_{ni\_mod}$:

$$\widehat{R}_{ni\_mod} = \frac{c4 \cdot \text{trace}(\widehat{R}_{ni})^{c5}}{n_{Rx}} I \quad \text{(equation 2a)},$$

wherein c4, c5 are e.g. predetermined real numbers.

According to a further embodiment of the present invention, said modified noise plus interference covariance matrix is obtained depending on the equation

$$\widehat{R}_{ni\_mod} = \det(\widehat{R}_{ni})^{\frac{1}{n_{Rx}}} I \quad \text{(equation 3)},$$

wherein $det(\hat{R}_{ni})$ is the determinant of said estimated noise plus interference covariance matrix $\hat{R}_{ni}$, wherein $I$ is the identity matrix, and wherein $n_{Rx}$ is the number of receive channels.

A generalized form of equation (3) may also be applied for obtaining the modified noise plus interference covariance matrix $\hat{R}_{ni\_mod}$:

$$\widehat{R}_{ni\_mod} = c6 \cdot \det(\widehat{R}_{ni})^{\frac{c7}{n_{Rx}}} I \quad \text{(equation 3a)},$$

wherein c6, c7 are e.g. predetermined real numbers.

According to still another embodiment of the present invention, it is also possible to determine the modified noise plus interference covariance matrix $\hat{R}_{ni\_mod}$ depending on a combination of said determinant $det(R_{ni})$ of said estimated noise plus interference covariance matrix $\hat{R}_{ni}$, said trace $trace(\hat{R}_{ni})$ of said estimated noise plus interference covariance matrix $\hat{R}_{ni}$, and the identity matrix $I$. It is also possible to determine said modified noise plus interference covariance matrix $\hat{R}_{ni\_mod}$ as a linear combination of equations (2), (2a), (3), (3a).

The above explained inventive modification according to equations (2), (2a), (3), (3a) advantageously yields a modified noise plus interference covariance matrix $\hat{R}_{ni\_mod}$ which is a diagonal matrix.

This has the advantage that further calculations such as a determination of filter weights for a receiver side processing and the like which require calculating an inverse modified noise plus interference covariance matrix $\widehat{R}_{ni\_mod}^{-1}$, can easily be performed.

Moreover, if the originally estimated noise plus interference covariance matrix $\hat{R}_{ni}$ erroneously comprises a matrix structure with nonvanishing matrix elements outside the primary diagnonal, which may be the case for poor estimation processes e.g. due to insufficient statistical information, the inventive modification as explained above provides an improved matrix structure in that a pure diagonal matrix shape is reestablished thus compensating processing errors that have introduced nonvanishing matrix elements outside the primary diagnonal.

A further aspect of the present invention is given by a wireless communications device according to claim 9.

The inventive wireless communications device, which may particularly be configured as a receiver, is configured to estimate a noise plus interference covariance matrix, preferably depending on a received signal, such as a reference or pilot signal. Additionally, the inventive wireless communications device is configured to determine a quality measure for said estimated noise plus interference covariance matrix depending on said estimated noise plus interference covariance matrix.

According to a further preferred embodiment of the invention, the wireless communications device is configured to perform the inventive method, particularly according to one of the claims 1 to 8.

Further advantageous embodiments of the invention are given in the dependent claims.

**Brief Description of the Figures**

Further features, aspects and advantages of the present invention are given in the following detailed description with reference to the drawings in which:

Figure 1    depicts a scenario for application of the inventive method,

Figure 2    depicts a functional diagram according to one embodiment of the method according to the present invention, and

Figure 3    depicts a flow-chart of an embodiment of the method according to the present invention.

## Description of the Embodiments

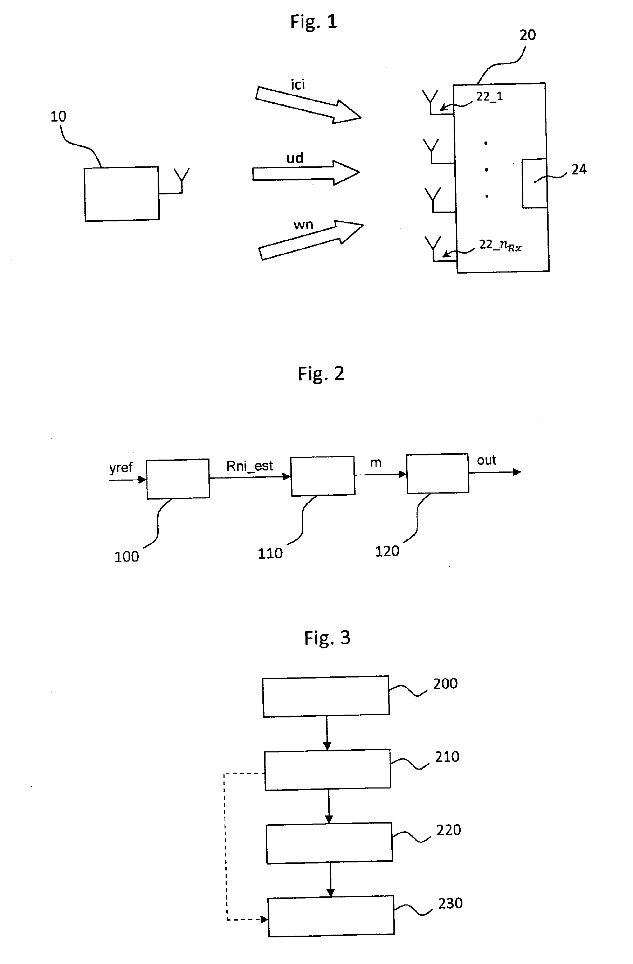

Figure 1 illustrates a typical wireless communications scenario in which data is transmitted from a transmitter 10 to a receiver 20 via an air interface, i.e. by using radio frequency signals.

The radio signals which are transmitted over the air interface to enable wireless data communications between transmitter 10 and receiver 20 typically suffer from noise and interference caused by multipath propagation, other radio signals on the same frequency band (i.e. from neighboring radio cell transmissions), thermal noise and other per se known effects. Consequently, block arrow ud of Figure 1 represents a component of radio signals transmitted from said transmitter 10 which comprise user data, while block arrows ici, wn represent inter cell interference portions and white noise portions that are received by the receiver 20 in addition to the user data ud.

The communication setup depicted by Figure 1 represents a so-called SIMO (single input, multiple output) configuration, because transmitter 10 has only one antenna, whereas receiver 20 has $n_{Rx}$ many antennas 22_1, .., 22_$n_{Rx}$, wherein e.g. $n_{Rx} = 4$.

In view of the above explained influences ici, wn affecting the wireless data transmission and the multi-channel SIMO configuration, a signal received by the receiver 20 can be represented as

$$y = hx + n \qquad \text{(equation 4)},$$

where x represents a data symbol that has been transmitted by said transmitter 10 thus forming part of the user data portion ud, y represents a received signal column vector per subcarrier of size $n_{Rx} \times 1$ and $n_{Rx}$ represents the number of receiver antennas 22_1, .., 22 $n_{Rx}$.

The component h of equation (4) represents a channel vector of user symbols of size $n_{Rx} \times 1$, and n is a column vector of size $n_{Rx} \times 1$ which represents noise plus interference including thermal noise as well as any interfering signal coming e.g. from neighboring cells (not shown) or sectors in a cellular network the configuration according to Figure 1 forms a part of. I.e., vector n of equation (4) represents the per se undesired interference and noise portions as symbolized by the block arrows ici, wn.

An equalizer of the receiver 20, which may e.g. be realized in form of a computer program being executed by the control unit 24 of the receiver 20, may e.g. estimate the transmitted signal y according to

$$\hat{x} = w_{opt}^{H} y \quad \text{(equation 5)};$$

wherein $\hat{x}$ represents an estimate of user data symbol x that has been transmitted by said transmitter 10, and $w_{opt}^{H}$ represents Wiener filter weights which may e.g. be obtained by

$$w_{opt}^{H} = \frac{\hat{h}^{H}\hat{R}_{ni}^{-1}}{1+\hat{h}^{H}\hat{R}_{ni}^{-1}\hat{h}} \quad \text{(equation 6)},$$

wherein $\hat{R}_{ni}^{-1}$ is the inverse of an estimated noise plus interference covariance matrix $\hat{R}_{ni}$ that characterizes a correlation of noise and interference as received by the receiver 20, wherein $\hat{h}$ represents a receiver side estimation of a channel coefficient vector h and wherein $\hat{h}^{H}$ represents the Hermitian vector $\hat{h}$.

The estimated noise plus interference covariance matrix $\hat{R}_{ni}=E\{nn^{H}\}$ can be determined by the receiver 20 according to conventional techniques, e.g. by evaluating reference signals or pilot signals which are transmitted by the transmitter 10 to the receiver 20 and which are both known by the transmitter 10 and the receiver 20.

In order to determine whether the estimated noise plus interference covariance matrix $\hat{R}_{ni}$, which can e.g. be obtained by conventional and per se known procedures, is suitable for the above described process of estimating the user data symbol x with sufficient precision, the present invention proposes to determine a quality measure for said estimated noise plus interference covariance matrix depending on said estimated noise plus interference covariance matrix.

The functional diagram of Figure 2 illustrates a corresponding procedure.

A received reference signal yref, which may e.g. be a pilot signal both known to the transmitter 10 and the receiver 20, is provided to a first function block 100. The first function block 100 performs an estimation of a noise plus interference covariance matrix based on the received reference signal yref, whereby an estimated noise plus interference covariance matrix Rni_est is obtained at an output of the function block 100.

According to the present invention, the estimated noise plus interference covariance matrix Rni_est is provided to a second function block 110 which is configured to determine a quality measure m for said estimated noise plus interference covariance matrix depending on said estimated noise plus interference covariance matrix. The obtained quality measure m is output by the function block 110.

Function block 120 receives said quality measure m at its input and performs an evaluation of the quality measure m, for instance in order to determine whether the quality measure m of the current estimated noise plus interference covariance matrix Rni_est is sufficient to allow a further processing at the receiver 20 based on the current estimated noise plus interference covariance matrix Rni_est.

Depending on the evaluation of the quality measure m, the function block 120 provides an output signal out which indicates how to further operate the receiver 20.

The function blocks 100, 110, 120 are preferably implemented in form of a computer program executed by the control unit 24 of the receiver 20.

According to a preferred embodiment of the invention, the quality measure m is determined depending on a determinant of said estimated noise plus interference covariance matrix Rni_est and/or a trace of said estimated noise plus interference covariance matrix Rni_est, preferably depending on a quotient of said determinant of said estimated noise plus interference covariance matrix and said trace of said estimated noise plus interference covariance matrix.

According to a further particularly preferred embodiment, said quality measure m is determined depending on the equation

$$m = \frac{n_{Rx}\cdot\det(\hat{R}_{ni})^{\frac{1}{n_{Rx}}}}{trace(\hat{R}_{ni})} \quad \text{(equation 1)},$$

wherein $det(\hat{R}_{ni})$ is the determinant of said estimated noise plus interference covariance matrix $\hat{R}_{ni}$, wherein $trace(\hat{R}_{ni})$ is the trace of said estimated noise plus interference covariance matrix $\hat{R}_{ni}$, and wherein $n_{Rx}$ is the number of receive channels, i.e. the number of receive antennas if a SIMO or MIMO configuration of the wireless communications receiver device is considered.

The term $\hat{R}_{ni}$ of equation (1) is equivalent to the signal Rni_est of Figure 2.

The aforementioned equation (1) advantageously provides a quality measure m which enables to efficiently assess the quality of the current noise plus interference covariance matrix $\hat{R}_{ni}$ as it has been estimated by function block 100 (Figur 2) depending on the received reference signal yref.

Thus, the receiver 20 may determine whether it is advisable to continue reception and estimation of data symbols from the transmitter 10 on the basis of the currently estimated noise plus interference covariance matrix $\hat{R}_{ni}$.

The flow-chart depicted by Figure 3 illustrates an embodiment of the inventive method.

In step 200, the inventive quality measure m is determined based on the currently estimated noise plus interference covariance matrix $\hat{R}_{ni}$. As already explained above, the noise plus interference covariance matrix $\hat{R}_{ni}$ may be determined by conventional procedures the skilled man is aware of.

After determining said quality measure m, in step 210 the determined quality measure is evaluated to judge whether the currently estimated noise plus interference covariance matrix $\hat{R}_{ni}$ is suitable for further processing. The evaluation 210 may e.g. comprise a comparison of the inventive quality measure m to a predetermined threshold. When obtaining the quality measure m according to equation (1), the values of the quality measure m range between 0 and 1, and the threshold value may be chosen between 0 and 1, too, e.g. as 0.5. The threshold value will usually be chosen depending on the specific implementation of the communications scenario and the configuration of the transmitter 10 (Figure 1) and/or the receiver 20. Moreover, the threshold value can also be changed dynamically, i.e. depending on current channel parameters of the wireless transmission and/or on details of an estimation process for determining the estimated noise plus interference covariance matrix $\hat{R}_{ni}$ and/or on further operational parameters of the receiver 20, and the like.

If the evaluation 210 (Figure 3) yields that the quality measure m exceeds the predetermined threshold, it is concluded that the currently estimated noise plus interference covariance matrix $\hat{R}_{ni}$; is not reliable, e.g. not suitable for the further processing such as determining Wiener filter weights according to equation (6).

In this case, according to a further advantageous embodiment, the inventive method proposes to modify the currently estimated noise plus interference covariance matrix $\hat{R}_{ni}$ to obtain a modified noise plus interference covariance matrix $\hat{R}_{ni\_mod}$ which is - in contrast to the currently estimated noise plus interference covariance matrix $\hat{R}_{ni}$ - suitable for further processing, particularly for determining Wiener filter weights according to equation (6). The inventive modification is represented by step 220 of Figure 3.

After the modified noise plus interference covariance matrix $\hat{R}_{ni\_mod}$ has been obtained in step 220, the inventive method proceeds with step 230 according to which a received signal y is estimated based on Wiener filter weights, cf. equation (6).

If the evaluation 210 yields that the quality measure m is less than or equal to the predetermined threshold, it is concluded that the currently estimated noise plus interference covariance matrix $\hat{R}_{ni}$; is reliable, e.g. suitable for the further processing such as determining Wiener filter weights according to equation (6). In this case, preferably no modification is performed, i.e. the method directly jumps to step 230 after the evaluation 210.

According to an embodiment, equations derived from equation (1) and having the general form

$$m = \frac{c1 \cdot \det(\hat{R}_{ni})^{c2}}{trace(\hat{R}_{ni})^{c3}} \quad \text{(equation 1a),}$$

wherein c1, c2, c3 are e.g. predetermined real numbers, may also be employed to determine the inventive quality measure m (step 200 of Figure 3) depending on the estimated noise plus interference covariance matrix $\hat{R}_{ni}$.

According to a further embodiment of the present invention, in step 220, said modified noise plus interference covariance matrix is obtained depending on equation (2):

$$\hat{R}_{ni\_mod} = \frac{trace(\hat{R}_{ni})}{n_{Rx}} I,$$

wherein $trace(\hat{R}_{ni})$ is the trace of said estimated noise plus interference covariance matrix $\hat{R}_{ni}$, wherein $I$ is the identity matrix, and wherein $n_{Rx}$ is the number of receive channels.

A generalized form of equation (2) may also be applied for obtaining 220 the modified noise plus interference covariance matrix $\hat{R}_{ni\_mod}$:

$$\widehat{R}_{ni\_mod} = \frac{c4 \cdot \text{trace}(\widehat{R}_{ni})^{c5}}{n_{Rx}} I \quad \text{(equation 2a)},$$

wherein c4, c5 are e.g. predetermined real numbers.

According to a further embodiment of the present invention, said modified noise plus interference covariance matrix is obtained in step 220 depending on the equation

$$\widehat{R}_{ni\_mod} = \det(\widehat{R}_{ni})^{\frac{1}{n_{Rx}}} I \quad \text{(equation 3)},$$

wherein $det(\widehat{R}_{ni})$ is the determinant of said estimated noise plus interference covariance matrix $\widehat{R}_{ni}$, wherein I is the identity matrix, and wherein $n_{Rx}$ is the number of receive channels.

A generalized form of equation (3) may also be applied for obtaining the modified noise plus interference covariance matrix $\widehat{R}_{ni\_mod}$:

$$\widehat{R}_{ni\_mod} = c6 \cdot \det(\widehat{R}_{ni})^{\frac{c7}{n_{Rx}}} I \quad \text{(equation 3a)},$$

wherein c6, c7 are e.g. predetermined real numbers.

According to still another embodiment of the present invention, it is also possible to determine the modified noise plus interference covariance matrix $\widehat{R}_{ni\_mod}$ depending on a combination of said determinant $det(\widehat{R}_{ni})$ of said estimated noise plus interference covariance matrix $\widehat{R}_{ni}$, said trace $trace(\widehat{R}_{ni})$ of said estimated noise plus interference covariance matrix $\widehat{R}_{ni}$, and the identity matrix $I$. It is also possible to determine said modified noise plus interference covariance matrix $\widehat{R}_{ni\_mod}$ as a linear combination of equations (2), (2a), (3), (3a) .

The above explained inventive modification 220 according to equations (2), (2a), (3), (3a) advantageously yields a modified noise plus interference covariance matrix $\widehat{R}_{ni\_mod}$ which is a diagonal matrix.

This has the advantage that further calculations such as a determination of filter weights, e.g. Wiener filter weights, cf. equation (6), for a receiver side processing and the like which require calculating an inverse modified noise plus interference covariance matrix $\widehat{R}_{ni\_mod}^{-1}$, can easily be performed.

Moreover, if the originally estimated noise plus interference covariance matrix $\widehat{R}_{ni}$ erroneously comprises a matrix structure with nonvanishing matrix elements outside the primary diagnonal, which may be the case for poor estimation processes e.g. due to insufficient statistical information, the inventive modification 220 as explained above provides an improved matrix structure in that a pure diagonal matrix shape is reestablished thus compensating processing errors that have introduced nonvanishing matrix elements outside the primary diagonal.

Although the inventive method is preferably carried out by the receiver 20 or its control unit 24, respectively, corresponding functionality for performing the inventive method may also be integrated in the transmitter 10 or other wireless communications devices, e.g. for providing execution of the inventive method to remote devices. In this case, of course, the estimated noise plus interference covariance matrix $\widehat{R}_{ni}$ of the respective receiving device must be provided to the other device that is to calculate the quality measure m.

The present invention is particularly advantageous, because it avoids the problems of conventional wireless communications devices which may suffer from substantial losses due to covariance matrix estimation errors, for such covariance matrix estimation errors may even be larger than a gain achieved by applying interference suppression schemes based on the covariance matrix.

The inventive principle enables to efficiently assess the quality of a noise plus interference covariance matrix $\widehat{R}_{ni}$ and, if necessary, to modify it so as to reduce a possible performance loss compared to a conventional receiver that does not try to estimate a full noise-covariance matrix. The inventive method thus increases the spectral efficiency of the wireless data transmission.

By using the inventive method, a performance loss is eliminated in situations where interference is at least nearly spatially uncorrelated. A robust method for detecting low spatial noise correlation is enabled by the inventive determination of the quality measure m. The calculation of a decision threshold required for the evaluation, cf. step 210 of Figure 2, requires a relatively small amount of computations compared to other methods such as Eigen value decomposition. Moreover, the inventive approach allows for a unified receiver architecture for IRC and Non-IRC receivers 20.

The inventive principle may be employed with any wireless communications setup that provides for a plurality of receive channels such as SIMO and MIMO systems according to long term evolution (LTE)-, LTE-Advanced and IEEE 802.11 (WLAN), 802.16 (WiMAX) standards.

Generally, the inventive principle may be realised by software such as a computer program executed by the control unit 24 of the receiver 20. It is also possible to implement the inventive method by means of firmware or hardware.

According to a further aspect, it is also possible to perform the inventive modification of the noise plus interference covariance matrix in the sense of equations (2), (2a), (3), (3a) without assessing the quality measure before. I.e., the inventive modification of the noise plus interference covariance matrix could also be performed without knowledge of an actual quality measure.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Method of operating a wireless communications device, particularly a receiver (20), wherein a noise plus interference covariance matrix is estimated, preferably depending on a received signal (yref), to obtain an estimated noise plus interference covariance matrix (Rni_est), wherein a quality measure (m) for said estimated noise plus interference covariance matrix (Rni_est) is determined (200) depending on said estimated noise plus interference covariance matrix (Rni_est).

2. Method according to claim 1, wherein a received signal is received via $n_{Rx}$ many receive channels (22_1, .., 22_$n_{Rx}$), particularly via $n_{Rx}$ many receiver antennas, and wherein said quality measure (m) is determined depending on a determinant of said estimated noise plus interference covariance matrix (Rni_est) and/or a trace of said estimated noise plus interference covariance matrix (Rni_est) and/or said number $n_{Rx}$ of receive channels (22_1, .., 22_$n_{Rx}$).

3. Method according to claim 2, wherein said quality measure (m) is determined depending on a quotient of said determinant of said estimated noise plus interference covariance matrix (Rni_est) and said trace of said estimated noise plus interference covariance matrix (Rni_est).

4. Method according to claim 2 or 3, wherein said quality measure (m) is determined depending on the equation

$$m = \frac{n_{Rx} \cdot \det(\hat{R}_{ni})^{\frac{1}{n_{Rx}}}}{trace(\hat{R}_{ni})},$$ wherein $det(\hat{R}_{ni})$ is the determinant of said estimated noise plus interference covariance

matrix $\ddot{R}_{ni}$, wherein $trace(\ddot{R}_{ni})$ is the trace of said estimated noise plus interference covariance matrix $\hat{R}_{ni}$, and wherein $n_{Rx}$ is the number of receive channels (22_1, .., 22_$n_{Rx}$) .

5. Method according to one of the preceding claims, wherein said estimated noise plus interference covariance matrix (Rni_est) is modified (220) depending on said quality measure (m) to obtain a modified noise plus interference covariance matrix.

6. Method according to claim 5, wherein said modification (220) is performed if the quality measure (m) exceeds a predetermined threshold value.

7. Method according to one of the claims 5 to 6, wherein said modified noise plus interference covariance matrix is obtained depending on the equation

$$\widehat{R}_{ni\_mod} = \frac{\text{trace}(\widehat{R}_{ni})}{n_{Rx}} I,$$

wherein $trace(\hat{R}_{ni})$ is the trace of said estimated noise plus interference covariance matrix $\hat{R}_{ni}$, wherein $I$ is the identity matrix, and wherein $n_{Rx}$ is the number of receive channels (22_1, .., 22_$n_{Rx}$).

8. Method according to one of the claims 5 to 7, wherein said modified noise plus interference covariance matrix is obtained depending on the equation

$$\widehat{R}_{ni\_mod} = \det(\widehat{R}_{ni})^{\frac{1}{n_{Rx}}} I,$$

wherein $det(\hat{R}_{ni})$ is the determinant of said estimated noise plus interference covariance matrix $\hat{R}_{ni}$, wherein $I$ is the identity matrix, and wherein $n_{Rx}$ is the number of receive channels (22_1, .., 22_$n_{Rx}$).

9. Wireless communications device, particularly a receiver (20), configured to estimate a noise plus interference covariance matrix, preferably depending on a received signal (yref), to obtain an estimated noise plus interference covariance matrix (Rni_est), wherein said receiver (20) is configured to determine (200) a quality measure (m) for said estimated noise plus interference covariance matrix (Rni_est) depending on said estimated noise plus interference covariance matrix (Rni_est).

10. Wireless communications device (20) according to claim 9, wherein said communications device (20) is configured to receive a received signal via $n_{Rx}$ many receive channels (22_1,.., 22_$n_{Rx}$), particularly via $n_{Rx}$ many receiver antennas, and to determine said quality measure (m) depending on a determinant of said estimated noise plus interference covariance matrix (Rni_est) and/or a trace of said estimated noise plus interference covariance matrix (Rni_est).

11. Wireless communications device (20) according to claim 10, wherein said communications device (20) is configured to determine said quality measure (m)

depending on the equation $m = \dfrac{n_{Rx} \cdot \det(\hat{R}_{ni})^{\frac{1}{n_{Rx}}}}{trace(\hat{R}_{ni})}$, wherein $det(\hat{R}_{ni})$ is the determinant of said estimated noise plus interference covariance matrix $\ddot{R}_{ni}$, wherein $trace(\hat{R}_{ni})$ is the trace of said estimated noise plus interference covariance matrix $\hat{R}_{ni}$, and wherein $n_{Rx}$ is the number of receive channels (22_1, .., 22_$n_{Rx}$).

12. Wireless communications device (20) according to one of the claims 9 to 11, wherein said communications device (20) is configured to modify (220) said estimated noise plus interference covariance matrix (Rni_est) depending on said quality measure (m) to obtain a modified noise plus interference covariance matrix (Rni_mod), particularly to perform said modification (220) if the quality measure (m) exceeds a predetermined threshold value.

13. Wireless communications device (20) according to claim 12, wherein said communications device (20) is configured to obtain said modified noise plus interference covariance matrix depending on the equation

$$\widehat{R}_{ni\_mod} = \frac{\text{trace}(\widehat{R}_{ni})}{n_{Rx}} I,$$

wherein $trace(\hat{R}_{ni})$ is the trace of said estimated noise plus interference covariance matrix $\hat{R}_{ni}$, wherein $I$ is the identity matrix, and wherein $n_{Rx}$ is the number of receive channels (22_1, .., 22_$n_{Rx}$).

14. Wireless communications device (20) according to claim 12, wherein said communications device (20) is configured to obtain said modified noise plus interference covariance matrix depending on the equation

$$\widehat{R}_{ni\_mod} = \det(\widehat{R}_{ni})^{\frac{1}{n_{Rx}}} I,$$

wherein $det(\hat{R}_{ni})$ is the determinant of said estimated noise plus interference covariance matrix $\hat{R}_{ni}$, wherein $I$ is the identity matrix, and wherein $n_{Rx}$ is the number of receive channels (22_1, .., 22_$n_{Rx}$).

15. Wireless communications device (20) according to one of the claims 9 to 14, wherein said wireless communications device (20) is configured to perform the method according to one of the claims 1 to 8.

## Fig. 1

## Fig. 2

## Fig. 3

**EUROPEAN SEARCH REPORT**

Europäisches Patentamt
European Patent Office
Office européen des brevets

Application Number

EP 09 29 0842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/231500 A1 (HEIKKILA MARKKU J [FI] ET AL) 25 September 2008 (2008-09-25) * abstract; claim 1; figures 3,4 * * paragraphs [0005] - [0007] * * paragraphs [0031], [0052], [0055], [0056] * | 1-15 | INV. H04B7/08 |
| X | US 2006/291596 A1 (PIIRAINEN OLLI [FI]) 28 December 2006 (2006-12-28) * claim 1; figures 4,6 * | 1-15 | |
| A | EP 2 043 281 A1 (PANASONIC CORP [JP]) 1 April 2009 (2009-04-01) * paragraphs [0205] - [0225]; figures 12-14 * | 1-15 | |
| A | JP 2007 288547 A (TOYOTA CENTRAL RES & DEV; NAGOYA INST TECHNOLOGY) 1 November 2007 (2007-11-01) * paragraph [0018]; claims 3-4 * | 1-15 | |

TECHNICAL FIELDS SEARCHED (IPC)

H04B

The present search report has been drawn up for all claims

| Place of search | Date of completion of the search | Examiner |
|---|---|---|
| Munich | 1 April 2010 | Martínez Cebollada |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 29 0842

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2010

| Patent document cited in search report | | Publication date | Patent family member(s) | | Publication date |
|---|---|---|---|---|---|
| US 2008231500 | A1 | 25-09-2008 | NONE | | |
| US 2006291596 | A1 | 28-12-2006 | NONE | | |
| EP 2043281 | A1 | 01-04-2009 | WO 2008084800 A1 | | 17-07-2008 |
| JP 2007288547 | A | 01-11-2007 | NONE | | |

For more details about this annex : see Official Journal of the European Patent Office, No. 12/82